# EUROPEAN PATENT APPLICATION

(11) **EP 1 489 119 A1**
(43) Date of publication of application: **22.12.2004**
(21) Application number: 03743617.7
(22) Date of filing: 05.03.2003
(51) Int. Cl.: C08G 18/66

(54) **THERMOSETTING POLYURETHANE ELASTOMER COMPOSITION, POLYURETHANE ELASTOMER AND PROCESS FOR PRODUCTION THEREOF**

(30) Priority: 07.03.2002 JP 2002062211
(71) Applicant: ASAHI GLASS COMPANY LTD., Tokyo 100-8405 (JP)
(72) Inventor: SAITO, Joichi, Suginami-ku, Tokyo 166-0013 (JP); SHIMOMA, H., c/o Asahi Glass Urethane Co., Ltd, Kashima-gun, Ibaraki 314-0195 (JP)
(74) Representative: Müller-Boré & Partner Patentanwälte
(86) International application number: PCT/JP2003/002592
(87) International publication number: WO 2003/074582

(57) **Abstract**

Provided is a polyurethane elastomer with a low hardness, a high strength and a high elongation. The polyurethane elastomer is obtained by reacting and curing an isocyanate-terminated prepolymer (i) obtained by reacting a polyoxyalkylene polyol having an average number of hydroxyl groups of over 2, a total degree of unsaturation of less than 0.05 meq/g and a number-average molecular weight of from 4000 to 20000, with a polyisocyanate compound, and a curing agent (ii) containing as curing components a polyoxytetramethylene polyol (a) and a chain extender (b) having two active-hydrogen-containing groups and having a number-average molecular weight of not more than 500.

## Description

### TECHNICAL FIELD

The present invention relates to a composition capable of providing a polyurethane elastomer with a low hardness and a high mechanical strength, a polyurethane elastomer and a method for its production.

### BACKGROUND ART

Heretofore, silicone rubber has been used in low hardness-requiring uses, such as various kinds of roller materials and mold materials for resin molding. However, since the silicone rubber causes a problem of pollution of surroundings and is expensive, polyurethane elastomer is suggested as an alternative to the silicone rubber.

A polyurethane elastomer is normally produced by reacting an isocyanate-terminated prepolymer with a chain extender and a crosslinking agent. In order to obtain a low hardness polyurethane elastomer by this method, there are two conceivable methods: (1) to increase a molecular weight of a raw material polyol, for the isocyanate-terminated prepolymer, to become soft segments, and (2) to decrease a content of the isocyanate group in the prepolymer in order to decrease amounts of the chain extender and the crosslinking agent to become hard segments. However, the elastomer obtained by either method had a low mechanical strength, which caused a problem of a crack or a chip when used, for example, as the mold material.

Furthermore, the methods both had a problem that the prepolymer became so highly viscous as to reduce fluidity, which resulted in increasing difficulties in injection into a mold and in works. There was another problem that a mixing property of the prepolymer with the chain extender became poor, so as to degrade moldability.

On the other hand, there is also a method of producing the polyurethane elastomer by using a polyoxytetramethylene polyol as the raw material polyol for the prepolymer. However, this method failed to obtain a low hardness elastomer without using a plasticizer, while achieving a superior mechanical strength.

### DISCLOSURE OF THE INVENTION

An object of the present invention is to solve the above problems and to provide a polyurethane elastomer having a low hardness and an excellent mechanical strength. The gist of the present invention is (1) to (3) below.
(1) A thermosetting polyurethane elastomer composition comprising an isocyanate-terminated prepolymer (i) obtained by reacting a polyoxyalkylene polyol (c) having as an oxyalkylene group an oxypropylene group at least 70% by mass, the polyoxyalkylene polyol having an average number of hydroxyl groups of over 2, a total degree of unsaturation of less than 0.05 meq/g and a number-average molecular weight of from 4000 to 20000, with a polyisocyanate compound, and
   a curing agent (ii) comprising as curing components a polyoxytetramethylene polyol (a) and a chain extender (b) having two active-hydrogen-containing groups and having a number-average molecular weight of not more than 500,
   wherein a relation of a hardness (H) by a type A durometer defined by JIS K 6253 and a tensile strength (X) (MPa) defined by JIS K 6251, of a polyurethane elastomer obtained by curing the composition is represented by X>H/10.
(2) A polyurethane elastomer obtained by reacting and curing an isocyanate-terminated prepolymer (i) obtained by reacting a polyoxyalkylene polyol (c) having as an oxyalkylene group an oxypropylene group at least 70% by mass, the polyoxyalkylene polyol having an average number of hydroxyl groups of over 2, a total degree of unsaturation of less than 0.05 meq/g and a number-average molecular weight of from 4000 to 20000, with a polyisocyanate compound, and
   a curing agent (ii) comprising as curing components a polyoxytetramethylene polyol (a) and a chain extender (b) having two active-hydrogen-containing groups and having a number-average molecular weight of not more than 500,
   wherein a relation of a hardness (H) by a type A durometer defined by JIS K 6253 and a tensile strength (X) (MPa) defined by JIS K 6251 is represented by X>H/10.
(3) A method for producing a polyurethane elastomer, which comprises reacting and curing an isocyanate-terminated prepolymer (i) obtained by reacting a polyoxyalkylene polyol (c) having as an oxyalkylene group an oxypropylene group at least 70% by mass, the polyoxyalkylene polyol having an average number of hydroxyl groups of over 2, a total degree of unsaturation of less than 0.05 meq/g and a number-average molecular weight of from 4000 to 20000, with a polyisocyanate compound, and
   a curing agent (ii) comprising as curing components a polyoxytetramethylene polyol (a) and a chain extender (b) having two active-hydrogen-containing groups and having a number-average molecular weight of not more than 500,
wherein a relation of a hardness (H) by a type A durometer defined by JIS K 6253 and a tensile strength (X) (MPa) defined by JIS K 6251, of the resulting polyurethane elastomer is represented by X>H/10.

### BEST MODE FOR CARRYING OUT THE INVENTION

### (Polyisocyanate Compound)

Examples of the polyisocyanate compound usable as a raw material for the isocyanate-terminated prepolymer in the present invention include aromatic polyisocyanates such as diphenylmethane diisocyanate, polyphenylene polymethylene polyisocyanate, 2,4-tolylene diisocyanate, 2,6-tolylene diisocyanate and xylene diisocyanate, aliphatic polyisocyanates such as hexamethylene diisocyanate, alicyclic polyisocyanates such as isophorone diisocyanate and 4,4'-methylenebis (cyclohexyl isocyanate), and urethane-, biuret-, allophanate-, carbodiimide- or isocyanurate-modified products of these polyisocyanates.

Among them, the polyisocyanate compound is preferably one of the aromatic diisocyanates from the viewpoint of the viscosity of the isocyanate-terminated prepolymer, and is preferably diphenylmethane diisocyanate or polyphenylene polymethylene polyisocyanate. In addition, mixtures of these compounds with other polyisocyanate compounds are also preferably applicable. In this case, a preferable mixture is one in which diphenylmethane diisocyanate and/or polyphenylene polymethylene polyisocyanate is at least 50 parts by mass, particularly at least 80 parts by mass, relative to 100 parts by mass of all polyisocyanate compounds. Furthermore, the polyisocyanate compound is preferably one in which an average number of isocyanate groups in one molecule is 2 to 2.5.

### (Polyol)

A raw material to be used for the isocyanate-terminated prepolymer (1) is a polyoxyalkylene polyol (c) having as an oxyalkylene group an oxypropylene group at least 70% by mass, the polyoxyalkylene polyol having an average number of hydroxyl groups of over 2, a total degree of unsaturation of less than 0.05 meq/g and a number-average molecular weight of from 4000 to 20000.

The polyoxyalkylene polyol (c) can be produced by reacting an alkylene oxide in the presence of an initiator by a known method.

The initiator to be used can be a compound having two to eight active hydrogen atoms, and specific examples thereof include dihydric alcohols such as ethylene glycol, diethylene glycol, propylene glycol, dipropylene glycol and 1,4-butane diol, trihydric alcohols such as trimethylolpropane, trimethylolethane, glycerol, 1,2,4-butane triol and 1,2,6-hexane triol, tetrahydric alcohols such as pentaerythritol and erythritol; hexahydric alcohols such as sorbitol and dipentaerythritol, octahydric alcohols such as tripentaerythritol and sucrose, diamines such as ethylenediamine, hexamethylenediamine and tolylenediamine, alkanolamines such as monoethanolamine, propanolamine and diethanolamine, phenols such as bisphenol A, and alkylene oxide adducts of relatively low molecular weight obtained by adding a small amount of an alkylene oxide to these compounds.

As the initiator, a trivalent or higher-valent compound can be used singly or these compounds can be used as mixed so as to attain the aimed average number of hydroxyl groups. The initiator is preferably a trihydric alcohol or a mixture of a dihydric alcohol and a trihydric alcohol.

Propylene oxide is used as the alkylene oxide. The alkylene oxides other than propylene oxide include 1,2-butylene oxide, 2,3-butylene oxide, ethylene oxide, and so on. In a case where propylene oxide and another alkylene oxide are used in combination, a percentage of propylene oxide is at least 70% by mass, preferably at least 85% by mass. Single use of propylene oxide is most preferable.

Namely, the polyoxyalkylene polyol (c) is preferably a polyoxypropylene polyol having as the oxyalkylene group the oxypropylene group at least 70% by mass, preferably substantially 100% by mass.

The number-average molecular weight is from 4000 to 20000, preferably from 8000 to 15000. If the molecular weight is less than 4000, the hardness is likely to be high because of a low molecular weight between crosslinking points. On the other hand, if the molecular weight exceeds 20000, the strength is likely to decrease because of a high molecular weight between crosslinking points.

The polyoxyalkylene polyol (c) has the average number of hydroxyl groups over 2. It is preferably not more than 8, particularly preferably not more than 6, especially preferably not more than 4. Here the number of hydroxyl groups of the polyoxyalkylene polyol in the present invention means a number based on the number of active hydrogen atoms of the initiator used for the production. If the average number of hydroxyl groups is not more than 2, a crosslinking density becomes lower and a compressive permanent strain becomes higher. On the other hand, if the average number of hydroxyl groups exceeds 8, the hardness becomes higher because of increase of the crosslinking density, and the viscosity of the prepolymer tends to be so high as to degrade workability.

Furthermore, the total degree of unsaturation of the polyoxyalkylene polyol (c) is less than 0.05, preferably not more than 0.03. If the total degree of unsaturation is not less than 0.05, the crosslinking density becomes lower and the compressive permanent strain becomes higher. Here the total degree of unsaturation is expressed in meq/g.

The polyoxyalkylene polyol having the low total degree of unsaturation as above can be produced by using a composite metal cyanide complex catalyst, a cesium type catalyst, or the like as an alkylene oxide ring-opening polymerization catalyst. It is preferable to use the composite metal cyanide complex catalyst.

The polyoxyalkylene polyol (c) may be a mixture of at least two polyols, and in that case, the mixture can be one having the number-average molecular weight, the average number of hydroxyl groups and the total degree of unsaturation within the above-mentioned ranges. In the case of the mixture, it is preferable that the individual polyols also have the number-average molecular weight, the number of hydroxyl groups and the total degree of unsaturation within the above-mentioned ranges.

The active hydrogen compound as a raw material for the prepolymer may contain, in addition to the polyoxyalkylene polyol (c), another compound such as polyoxytetramethylene polyol substantially comprising only oxytetramethylene groups, polyoxyethylene polyol, a polyoxypropylene polyol containing an oxypropylene group less than 70% by mass as the oxyalkylene group, or polyester polyether polyol, but an amount thereof is preferably not more than 20% by mass relative to the total amount of the active hydrogen compound as a raw material for the prepolymer. It is more preferable to contain no such compounds.

### (Prepolymer)

The isocyanate-terminated prepolymer can be produced by reacting the polyisocyanate compound with the above-described polyoxyalkylene polyol (c) in a proportion of the isocyanate group/the hydroxyl group (molar ratio) of from 2 to 10, preferably from 3 to 6. If the molar ratio is less than 2, the viscosity of the prepolymer tends to be so high as to degrade the workability. On the other hand, if the molar ratio exceeds 10, there arises a problem that the prepolymer is likely to foam.

Furthermore, a content of the isocyanate group (in terms of mass) in the prepolymer is preferably from 1 to 10%, particularly preferably from 1.5 to 6.0%, most preferably from 2 to 4%. If the isocyanate group content is less than 1%, the viscosity of the prepolymer becomes so high as to degrade the workability. On the other hand, if the isocyanate group content exceeds 10%, there arises a problem that the prepolymer is likely to foam.

The isocyanate-terminated prepolymer can be produced by well-known methods. For example, it can be produced by reacting the polyisocyanate compound and the above-described polyoxyalkylene polyol (c) under heat, optionally in the presence of a urethane reaction catalyst, under a dry nitrogen stream and at 60 to 100°C for 1 to 20 hours.

### (Curing Agent)

The present invention employs as the curing agent (ii) a curing agent comprising as curing components the polyoxytetramethylene polyol (a) and the chain extender (b) having two active-hydrogen-containing groups and having a number-average molecular weight of not more than 500.

The polyoxytetramethylene polyol (a) is preferably one having as the oxyalkylene group the oxytetramethylene group at least 70% by mass, more preferably substantially 100% by mass.

The average number of hydroxyl groups of the polyoxytetramethylene polyol is preferably from 1.5 to 2.5, particularly preferably 2. The number-average molecular weight is preferably from 650 to 6000, particularly preferably from 850 to 3000. If the number-average molecular weight is less than 650, the hardness is likely to be high because of a low molecular weight between crosslinking points. On the other hand, if the number-average molecular weight exceeds 6000, the polyoxytetramethylene polyol is likely to crystallize to degrade compatibility with the chain extender, so that storage stability becomes worse, undesirably.

The present invention employs the chain extender (b) having two active-hydrogen-containing groups and having the number-average molecular weight of not more than 500. The number-average molecular weight of the chain extender is preferably not more than 300. If the molecular weight exceeds 500, the strength of the polyurethane elastomer tends to decrease. The active-hydrogen-containing groups are preferably hydroxyl groups or amino groups, particularly preferably hydroxyl groups. A compound having at least 3 active-hydrogen-containing groups may be used in part, but it will cause decrease of the strength and elongation. It is thus preferable not to use such a compound.

Examples of the chain extender (b) to be used in the present invention include dihydric alcohols such as ethylene glycol, diethylene glycol, 1,2-propane diol, 1,3-propane diol, 1,3-butane diol, 1,4-butane diol, 1,6-hexane diol, 2-methyl-1,3-propane diol, 2,2-dimethyl-1,3-propane diol, 2-methyl-1,5-heptane diol, 2-ethyl-2-butyl-1,3-propane diol, cyclohexane-1,4-diol and cyclohexane-1,4-dimethanol, and diamines such as dimethyl thiotoluene diamine. The chain extender is preferably one of the dihydric alcohols, and is particularly preferably 1,4-butane diol or 1,3-propane diol.

The proportion of the chain extender (b) to the polyoxytetramethylene polyol (a) is preferably 2 to 20 parts by mass of (b), particularly preferably 5 to 15 parts by mass, relative to 100 parts by mass of (a). If it is less than 2 parts by mass, no satisfactory strength is obtained. On the other hand, if it exceeds 20 parts by mass, the compatibility between (a) and (b) becomes worse, whereby the pot life becomes short to degrade the workability. Furthermore, it is also possible to use as a curing component, a polyoxypropylene polyol with its terminal group capped with an oxyethylene group as an active-hydrogen-containing compound other than the polyoxytetramethylene polyol (a) and the chain extender (b), and its content is preferably not more than 20% by mass relative to the total amount of curing components. It is particularly preferable not to use it.

### (Composition)

The present invention provides the thermosetting polyurethane elastomer composition comprising the above isocyanate-terminated prepolymer (i) and the curing agent (ii). The proportion of the isocyanate-terminated prepolymer (i) and the curing agent (ii) is preferably such that a ratio of the active-hydrogen-containing group in the curing agent (ii)/the isocyanate group in the prepolymer (i) is from 0.7 to 1.2, particularly preferably from 0.85 to 1.05.

The composition according to the present invention may contain a known urethane reaction catalyst for reaction of the prepolymer (i) and the curing agent (ii). Examples of the catalyst include organic tin compounds such as dibutyltin dilaurate, dioctyltin dilaurate, dibutyltin dioctoate and tin 2-ethylhexanoate, iron compounds such as iron acetylacetonate and iron chloride; tertiary amine type compounds such as triethylamine and triethylenediamine, and so on. Among them, the organic tin compounds are preferable.

The amount of the catalyst added is preferably from 0.0001 to 0.1 part by mass, particularly preferably from 0.001 to 0.01 part by mass, based on 100 parts by mass of the total amount of the prepolymer and the curing agent. If it is less than 0.0001 part by mass, a long time is necessary before a molded product becomes ready to be released from a mold. On the other hand, if it exceeds 0.1 part by mass, the pot life after mixing of the reaction components becomes too short. Either case is undesirable. In a case of catalyst being used, it is preferably blended in the curing agent (ii).

Furthermore, the thermosetting polyurethane elastomer composition of the present invention can contain such additives as a filler, a reinforcing material, a stabilizer, a flame retardant, a mold-releasing agent and an antifungal agent as described below. Here, the properties of the polyurethane elastomer according to the present invention refer to those of the polyurethane elastomer without such additives.

Examples of the filler and the reinforcing material include carbon black, aluminum hydroxide, calcium carbonate, titanium oxide, silica, glass, crushed bone, wood flour, fiber flake, and so on. Examples of the stabilizer include various kinds of antioxidants, various kinds of ultraviolet absorbers, various kinds of light stabilizers, and so on. Examples of the flame retardant include chloroalkyl phosphate, dimethyl methylphosphonate, ammonium polyphosphate, organic bromine compounds, and so on. Examples of the mold-releasing agent include wax, soaps, silicone oil, and so on, and examples of the antifungal agent include pentachlorophenol, pentachlorophenol laurate, bis(tri-n-butyltin) oxide, and so on.

The thermosetting polyurethane elastomer composition of the present invention preferably contains no plasticizer. Here, the plasticizer means a compound having a function of reducing the viscosity and having no reactive group. Specific examples of the plasticizer include phthalates such as bis-2-ethylhexyl phthalate and dibutyl phthalate, aliphatic carboxylates such as dioctyl adipate, diisodecyl succinate, dibutyl sebacate and dibutyl oleate.

The thermosetting polyurethane elastomer composition of the present invention employs the specific raw materials, and thus shows the effect of excellent workability without use of the plasticizer.

### (Polyurethane Elastomer and Production Method)

The present invention further provides a polyurethane elastomer obtained by reacting and curing the above-described isocyanate-terminated prepolymer (i) and curing agent (ii), and a production method of reacting and curing the above-described isocyanate-terminated prepolymer (i) and curing agent (ii).

For producing the polyurethane elastomer, a cast molding method using a mold can be employed. In this case, for example, the polyurethane elastomer can be produced as follows: the curing agent preliminarily uniformly dissolved at 25 to 40°C is added to the prepolymer preliminarily heated at 25 to 40°C; a catalyst is further added thereto; the mixture is stirred and mixed until it becomes uniform; it is defoamed under a reduced pressure; it is injected into a mold; and it is cured under heat at 120°C for 30 minutes, followed by release from the mold.

The mold temperature is preferably from 60 to 150°C, particularly preferably from 80 to 130°C. If the temperature is lower than 60°C, defective curing occurs, so as to lengthen the curing period. On the other hand, if the temperature exceeds 150°C, the reaction is so fast that the raw composition is cured before spreading over the entire mold, or coloring occurs because of thermal deterioration, undesirably.

Furthermore, the resulting polyurethane elastomer, after released from the mold, is heated at 60 to 100°C for a few hours, if required, to complete the crosslinking reaction (postcure). Depending on conditions, it is further cured at room temperature for 1 to 3 days, whereby remaining isocyanate groups can be eliminated.

Reaction injection molding (RIM) can also be used as the cast molding method, in addition to various cast molding methods generally used. Furthermore, it is possible to coat various kinds of substrates with the thermosetting polyurethane elastomer composition according to the present invention by means of an airless spray or the like and to cure the composition on the substrates, thereby forming the polyurethane elastomer.

### (Properties of Elastomer)

The polyurethane elastomer obtained by the above method of the present invention has such a feature that a relation between a hardness (H) by means of a type A durometer defined by JIS K 6253 and a tensile strength (X) (MPa) defined by JIS K 6251 is represented by X>H/10. Furthermore, the hardness (H) is preferably from 10 to 70, particularly preferably from 20 to 50. As described above, the properties refer to those of the polyurethane elastomer produced without additives.

The polyurethane elastomer of the present invention specifically has a low hardness and a high strength, and is useful for mold materials for resin molding, various kinds of rollers for business equipment such as sheet feed rollers, sheet discharge rollers, transfer rollers, development rollers and charging rollers, various kinds of blades for screen printing or the like, sealing materials, vibration absorbers, shock absorbers, and so on.

### EXAMPLES

Now, the present invention will be described in further detail with reference to examples. Examples 1 to 4 are examples of the present invention and Examples 5 and 6 are comparative examples.

### (Evaluation Items and Measurement Methods)

(1) Isocyanate group content (NCO group content): it was measured in accordance with JIS K 7301.
(2) Hydroxyl value: it was measured in accordance with JIS K 1557.
(3) JIS-A hardness: it was measured by means of a type A durometer in accordance with JIS K 6253.
(4) Compressive permanent strain: it was measured by using a test piece in a diameter of 29 mm and a thickness of 12.7 mm in accordance with JIS K 6262.
(5) Tensile test: it was done by using a No. 3 test piece of dumbbell-shape from a sheet in a thickness of 2 mm at a pull rate of 500 mm/min, at 23°C under an atmosphere of relative temperature of 65% in accordance with JIS K 6251.

### (Raw Materials)

Polyoxypropylene polyols with properties shown in Table 1 were used as polyols A1 to A5, which were produced by using initiators as shown in Table 1 and a zinc hexacyanocobaltate complex catalyst. Polyoxytetramethylene polyols with properties as shown in Table 1 were used as polyols B1 and B2. Diphenylmethane diisocyanate (Millionate MT manufactured by NIPPON POLYURETHANE INDUSTRY CO., LTD.) (MDI in the table) and polyphenylene polymethylene polyisocyanate (MR-200, isocyanate group content: 31% manufactured by NIPPON POLYURETHANE INDUSTRY CO., LTD.) (c-MDI in the table) were used as polyisocyanate compounds.

### (Production of Prepolymer)

A four-neck separable flask equipped with a stirrer, a dropping funnel, a thermometer and a nitrogen introduction tube was charged with the polyisocyanate compound shown in Table 2 in an amount of parts shown in Table 2 and it was completely melted at 40 to 50°C. Then, the polyols shown in Table 2 were introduced in amounts of parts shown in Table 2 under a dry nitrogen stream with stirring (the total number of unsaturation of the polyol mixture is also shown in Table 2). The temperature inside the flask was maintained at 70°C for 30 minutes and thereafter dibutyltin dilaurate was added in an amount of 1 ppm based on the total amount of the raw materials. The temperature was then maintained at 80°C for 4 hours to effect reaction to obtain an isocyanate-terminated prepolymer (P1 to P4). The isocyanate group content of the prepolymer obtained is shown in Table 2.

### (Curing Agent)

Curing agents were obtained by mixing polyols and chain extenders as shown in Tables 3 and 4 in amounts of parts as shown in Table 3, together with an amine type catalyst (U-CAT 1102 manufactured by SAN-APRO LTD) in amounts of parts as shown in Table 3. Here, polyols B1 and B2 were used in a molten state at 25 to 40°C. Furthermore, in the table 1,4-BD represents 1,4-butane diol, and 1,3-PD represents 1,3-propane diol.

### EXAMPLES 1 to 6

The isocyanate-terminated prepolymers and the curing agents were blended in combinations and amounts of parts as shown in Tables 4 and 5. Molar ratios of hydroxyl group/isocyanate group (OH/NCO molar ratios in the table) are also presented in Tables 4 and 5. Then each of the mixtures was mixed for about 3 minutes by means of a stirrer, defoamed under a reduced pressure, and injected into a mold for sheet (thickness: 2 mm) in a heating furnace maintained at 120°C while avoiding inclusion of bubbles. After each mixture was cured under heat for 30 minutes, it was released from the mold and further heated at 100°C for 16 hours to obtain a molded product. The molded products were kept still at room temperature for 24 hours and their properties were then measured. The measured value of the properties are presented in Tables 4 and 5.

**Table 1**

| Name | Initiator | Number of hydroxyl groups | Hydroxyl value (mgKOH/g) | Number average molecular weight | Total number of unsaturation (meq/g) |
|---|---|---|---|---|---|
| A1 | Glycerol | 3 | 16.8 | 10000 | 0.027 |
| A2 | Propylene glycol | 2 | 11.2 | 10000 | 0.026 |
| A3 | Glycerol | 3 | 10.5 | 16000 | 0.023 |
| A4 | Propylene glycol | 2 | 28.1 | 4000 | 0.024 |
| A5 | Glycerol | 3 | 33.7 | 5000 | 0.100 |
| B1 | - | 2 | 112.2 | 1000 | - |
| B2 | - | 2 | 56.1 | 2000 | - |

**Table 2**

| Parts | P1 | P2 | P3 |
|---|---|---|---|
| MDI (parts) c-MDI (parts) | 123 | 201 | 168 |
| Polyol A1 | 377 | | |
| Polyol A2 | 500 | | 670 |
| Polyol A3 | | 1070 | |
| Polyol A4 | | 400 | |
| Polyol A5 | | | 335 |
| Number average molecular weight | 10000 | 8800 | 7500 |
| Average number of hydroxyl groups | 2.43 | 2.40 | 2.50 |
| Total number of unsaturation | 0.026 | 0.023 | 0.051 |
| NCO content (%) | 3.1 | 2.9 | 3.5 |

**Table 3**

| Curing agent | K1 | K2 | K3 | K4 | K5 |
|---|---|---|---|---|---|
| Polyol A1 | | | | | 51.7 |
| Polyol A4 | | | | | 46.6 |
| Polyol B1 | 88.1 | 96.0 | | 92.3 | |
| Polyol B2 | | | 91.5 | | |
| 1,4-BD | 11.9 | | | 7.7 | 1.73 |
| 1,3-PD | | 4.0 | 8.5 | | |
| Catalyst | 0.60 | 0.40 | 0.43 | 0.60 | 0.15 |

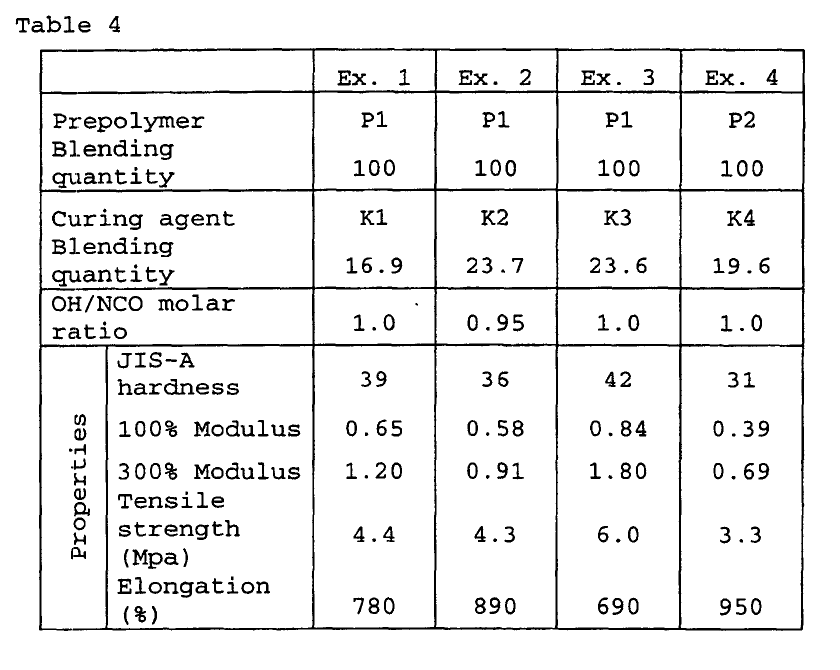

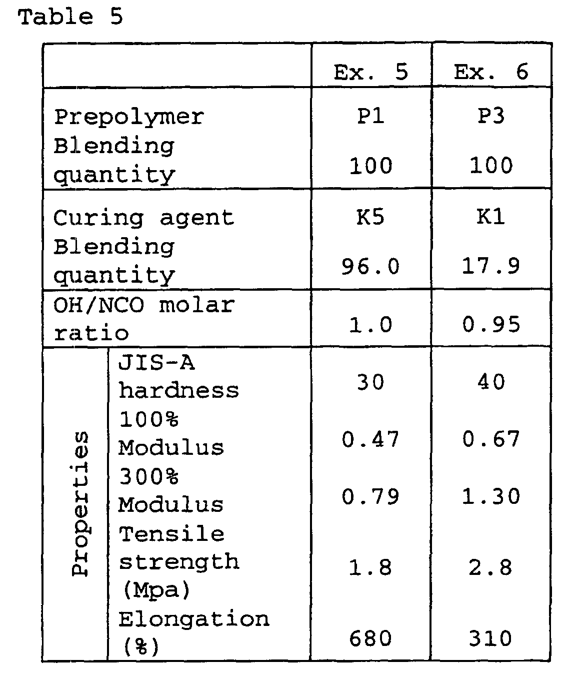

### INDUSTRIAL APPLICABILITY

According to the production method of the present invention, a polyurethane elastomer having a low hardness but a high strength can be produced by use of a polyoxyalkylene polyol having an oxypropylene group at least 70% by mass as an oxyalkylene group. Furthermore, since the present invention does not require use of a plasticizer, there will arise no problem of pollution in surroundings or the like due to bleeding-out of the plasticizer. In addition, the polyurethane elastomer obtained shows the effect of excellent elongation.

## Claims

1. A thermosetting polyurethane elastomer composition comprising an isocyanate-terminated prepolymer (i) obtained by reacting a polyoxyalkylene polyol (c) having as an oxyalkylene group an oxypropylene group at least 70% by mass, the polyoxyalkylene polyol having an average number of hydroxyl groups of over 2, a total degree of unsaturation of less than 0.05 meq/g and a number-average molecular weight of from 4000 to 20000, with a polyisocyanate compound, and
a curing agent (ii) comprising as curing components a polyoxytetramethylene polyol (a) and a chain extender (b) having two active-hydrogen-containing groups and having a number-average molecular weight of not more than 500,
wherein a relation of a hardness (H) by a type A durometer defined by JIS K 6253 and a tensile strength (X) (MPa) defined by JIS K 6251, of a polyurethane elastomer obtained by curing the composition is represented by X>H/10.

2. The thermosetting polyurethane elastomer composition according to Claim 1, which contains no plasticizer.

3. The thermosetting polyurethane elastomer composition according to Claim 1 or 2, wherein 2 to 20 parts by mass of (b) is used relative to 100 parts by mass of (a).

4. A polyurethane elastomer obtained by reacting and curing an isocyanate-terminated prepolymer (i) obtained by reacting a polyoxyalkylene polyol (c) having as an oxyalkylene group an oxypropylene group at least 70% by mass, the polyoxyalkylene polyol having an average number of hydroxyl groups of over 2, a total degree of unsaturation of less than 0.05 meq/g and a number-average molecular weight of from 4000 to 20000, with a polyisocyanate compound, and
a curing agent (ii) comprising as curing components a polyoxytetramethylene polyol (a) and a chain extender (b) having two active-hydrogen-containing groups and having a number-average molecular weight of not more than 500,
wherein a relation of a hardness (H) by a type A durometer defined by JIS K 6253 and a tensile strength (X) (MPa) defined by JIS K 6251 is represented by X>H/10.

5. The polyurethane elastomer according to Claim 4, wherein the hardness (H) is from 10 to 70.

6. The polyurethane elastomer according to Claim 4 or 5, which contains no plasticizer.

7. The polyurethane elastomer according to Claim 4, 5 or 6, wherein 2 to 20 parts by mass of (b) is used relative to 100 parts by mass of (a).

8. A method for producing a polyurethane elastomer, which comprises reacting and curing an isocyanate-terminated prepolymer (i) obtained by reacting a polyoxyalkylene polyol (c) having as an oxyalkylene group an oxypropylene group at least 70% by mass, the polyoxyalkylene polyol having an average number of hydroxyl groups of over 2, a total degree of unsaturation of less than 0.05 meq/g and a number-average molecular weight of from 4000 to 20000, with a polyisocyanate compound, and
a curing agent (ii) comprising as curing components a polyoxytetramethylene polyol (a) and a chain extender (b) having two active-hydrogen-containing groups and having a number-average molecular weight of not more than 500,
wherein a relation of a hardness (H) by a type A durometer defined by JIS K 6253 and a tensile strength (X) (MPa) defined by JIS K 6251, of the resulting polyurethane elastomer is represented by X>H/10.

9. The method according to Claim 8, wherein no plasticizer is used.

10. The method according to Claim 8 or 9, wherein 2 to 20 parts by mass of (b) is used relative to 100 parts by mass of (a).
